# EUROPEAN PATENT SPECIFICATION

(11) **EP 3 750 835 B1**
(45) Date of publication and mention of the grant of the patent: **05.01.2022**
(21) Application number: 19861268.1
(22) Date of filing: 13.05.2019
(51) Int. Cl.: B65G 47/90, B65G 47/84

(54) **TRANSFER MANIPULATOR CAPABLE OF RETAINING ORIENTED ROTATION**
RICHTUNGSHALTENDER ROTATIONSÜBERTRAGENDER MANIPULATOR
MANIPULATEUR DE TRANSFERT APTE À CONSERVER UNE ROTATION ORIENTÉE

(30) Priority: 26.04.2019 CN 201910345106
(43) Date of publication of application: 16.12.2020
(73) Proprietor: ZHEJIANG HOPING MACHINERY CO., LTD., Technology Industrial Zone Wenzhou Zhejiang 325200 (CN)
(72) Inventor: YANG, Yifu, Wenzhou, Zhejiang 325200 (CN); LI, Wenlei, Wenzhou, Zhejiang 325200 (CN); LI, Junjie, Wenzhou, Zhejiang 325200 (CN)
(74) Representative: Kayahan, Senem
(86) International application number: PCT/CN2019/086523
(87) International publication number: WO 2020/215391

(56) References cited:
- EP-A1- 3 424 850
- WO-A2-2009/114332
- CN-A- 103 828 503
- CN-A- 103 828 503
- CN-A- 105 083 622
- CN-A- 108 029 237
- CN-A- 108 029 237
- CN-A- 109 502 320
- JP-B2- 4 008 011
- US-A1- 2004 197 182

## Description

### TECHNICAL FIELD

The invention relates to a manipulator of the pharmaceutical machinery filed, in particular to a transfer manipulator for transferring a blister or a pillow bag.

### BACKGROUND

The blister packaging machine comprises a blister machine and a boxing machine, wherein the blister machine is used for forming and encapsulating a medicine blister, the boxing machine is used for packing the medicine blister into box, the two machines are linked by a transfer manipulator. Similarly, the pillow bag packaging machine comprises a pillow bag machine and a boxing machine, wherein the pillow bag machine is used for forming and encapsulating a pillow bag, the boxing machine is used for packing the pillow bag in box, and the two machines are linked by a transfer manipulator. However, for both the blister packaging machine and the pillow bag packaging machine, due to the structure limitation, the existing rotary manipulator can only achieve a whole-process directional holding rotation or a whole-process revolution, the rotary manipulator has the disadvantages that it transfers a single material, lacks of system combination, and cannot give consideration to the systematic design that allows a high speed transfer of various kinds of materials in different packages and a combined linkage of various linkage equipment in different packages and various arrangements.

WO 2009/114332 discloses a rotary system according to the preamble of claim 1 comprising a rotary system for transferring articles from a first conveyor to a second conveyor wherein in order to control the position on which successive groups of articles are deposited on the second conveyor a certain angular velocity of the arms of the rotary systems must be reached.

### SUMMARY

Considering the deficiencies of the prior art, the invention provides a directional holding rotary transfer manipulator for holding directional rotation at the lifting position.

The directional holding rotary transfer manipulator comprises a rotating shaft, a rotating frame, a suction nozzle mechanism and a rotary power source, wherein the rotating shaft is installed in a main seat and connected with the rotary power source in a transmission way, the rotating frame is installed on the rotating shaft, and the suction nozzle mechanism is installed on the rotating frame. The manipulator is characterized in that a holding cam and a lifting cam are installed on the main seat; a lifting guide groove is arranged on a cylindrical surface of the lifting cam along the circumference, the lifting guide groove is provided with a lifting bending section, a holding guide groove is arranged on a cylindrical surface of the holding cam along the circumference, the holding guide groove is provided with a holding bending section, and the holding bending section of the holding guide groove corresponds to the position of the lifting bending section on the lifting guide groove. The suction nozzle mechanism includes a suction nozzle, a suction rod, a guide block, a lifting roller and a retaining roller, wherein the suction nozzle is installed on the suction rod, the suction rod is rotatably installed on the rotating frame, the guide block is rotatably installed on the suction rod, the lifting roller is installed on the inner side of the guide block and located in the lifting guide groove, the retaining roller is connected with the suction rod through a rotary arm, and the retaining roller is positioned in the holding guide groove.

A positioning groove block is installed on the said rotating frame, a positioning groove extending vertically is arranged on the inner side surface of the positioning groove block, a positioning roller is connected to the outer side of the guide block and the positioning roller is located in the positioning groove.

The said main seat is installed on a lifting base, the lifting base can be installed on a fixed base in such a way that the lifting base can be lifted, and the lifting base is connected with a lifting power source that drives the lifting of the lifting base.

A sliding rail is installed on the fixed base, a sliding seat is installed on the lifting base, and the sliding seat is arranged on the sliding rail in a sliding way.

A screw rod is installed on the fixed base, a thread insert is installed on the sliding base, the screw rod is connected with the thread insert, and the screw rod is connected with the lifting power source.

A main air path is provided on the rotating shaft, an air outlet of the main air path is communicated with an air path on the suction rod through a lower air path, the air path on the suction rod is communicated with the suction nozzle, an air inlet of the main air path is communicated with a rotary air path through an upper air path, the rotary air path is connected with an electromagnetism valve island, and the electromagnetism valve island is connected with an air storage tank.

The holding cam and the lifting cam are both made of supramolecular materials.

According to a directional holding rotary transfer manipulator provided by the invention, the two cams can achieve bi-directional function so that the suction nozzle only holds directional rotation at the lifting position. This manipulator can not only significantly improve the stability of material lifting, but also can diversify the combination of the blisters and the pillow bags or the blisters and boxes; the manipulator has the advantages that the linkage space proportion is reduced, the layout can be arranged according to a user's space, horizontal linkage and vertical linkage can be achieved.

### Description of The Drawings

FIG.1 depicts a three-dimensional diagram of the invention mounted on a rack;
FIG.2 depicts a three-dimensional diagram of the invention;
FIG.3 depicts a cross-sectional view of the invention;
FIG.4 depicts a partial enlarged drawing of the position C as shown in FIG.3;
FIG.5 depicts a three-dimensional diagram of the suction nozzle mechanism;
FIG.6 depicts a bottom view of the holding cam;
FIG.7 depicts a schematic diagram for the pillow bag machine and the boxing machine of the invention;
FIG.8 depicts a schematic diagram for linkage of the blister machine, the pillow bag machine and the boxing machine of the invention;
FIG.9 depicts a schematic diagram for linkage of the blister machine and the boxing machine of the invention (two-channel boxing);
FIG.10 depicts a schematic diagram for linkage of the blister machine and the boxing machine of the invention (three-channel boxing);

### Detailed Description of The EmbodimentS

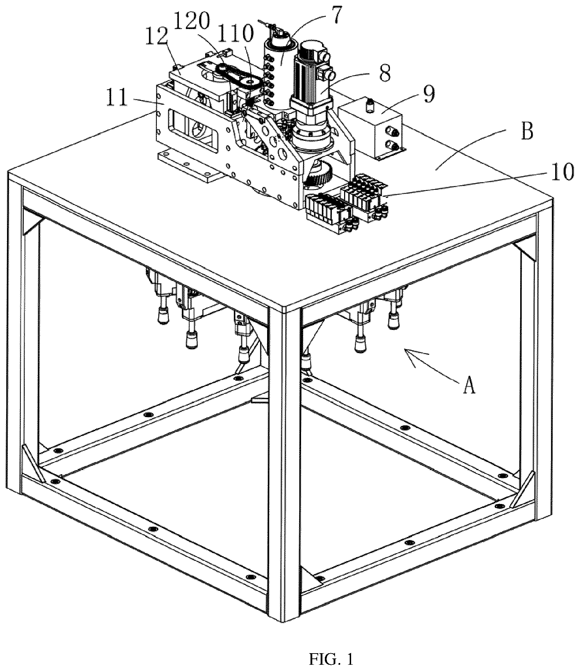

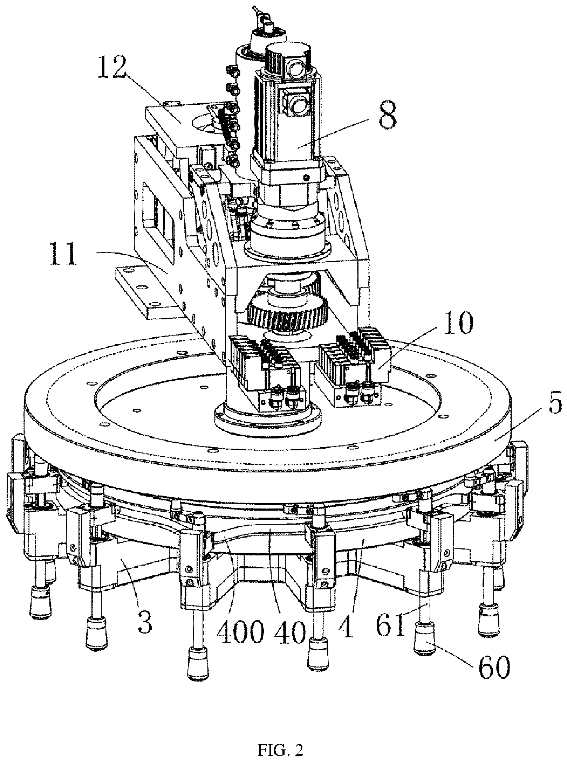

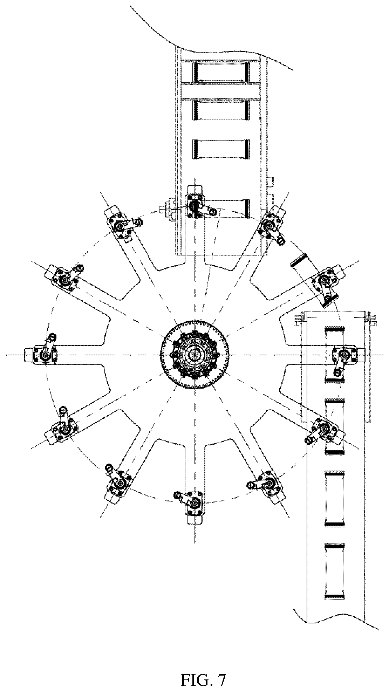

As shown in FIG.1 and FIG.2, the directional holding rotary transfer manipulator A is mounted on the rack B and located between the two equipment to be linked; as shown in FIG.7, the directional holding rotary transfer manipulator connects the pillow bag machine and the boxing machine, so that the pillow bag produced by the pillow bag machine can be transferred on the boxing machine through the directional holding rotary transfer manipulator A, thereby completing the packing of pillow bags in box.

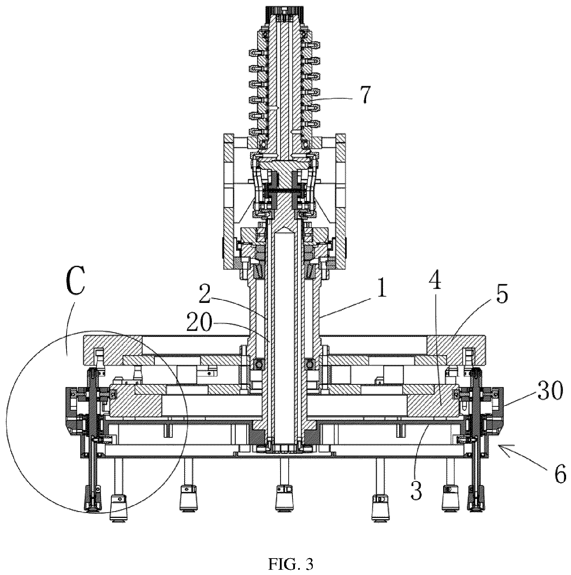

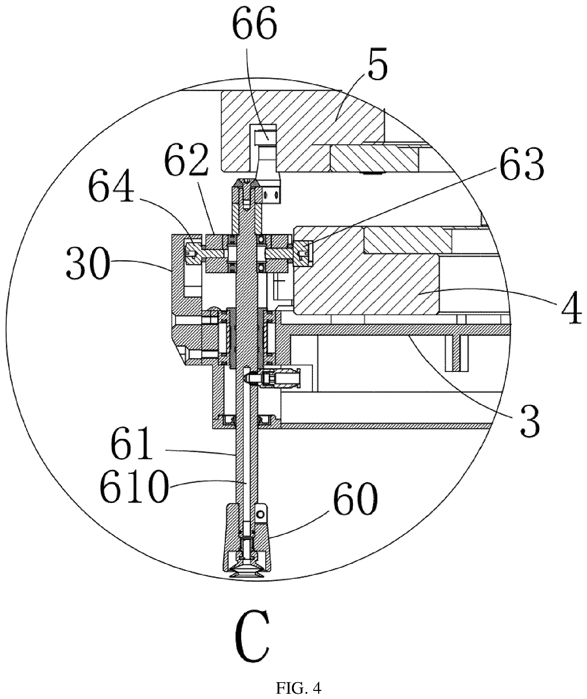

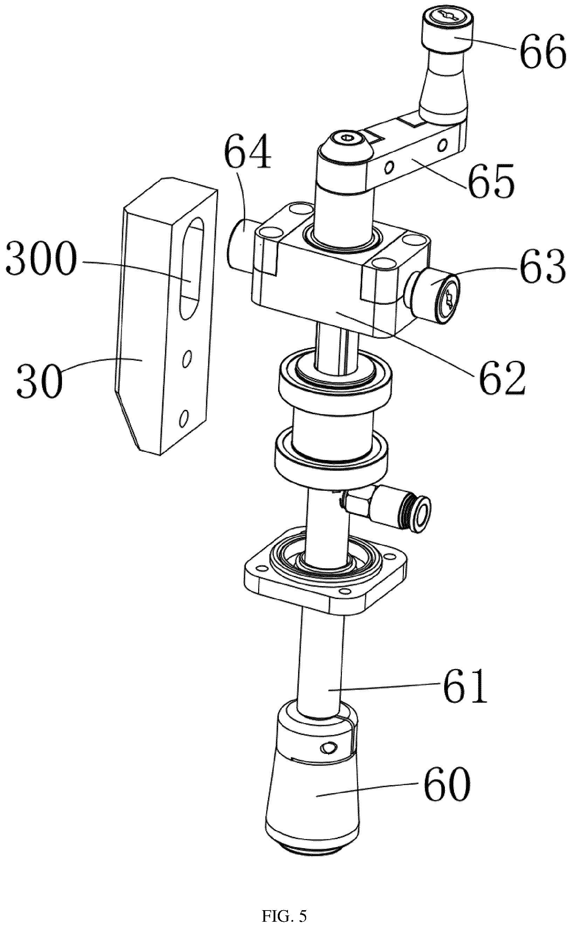

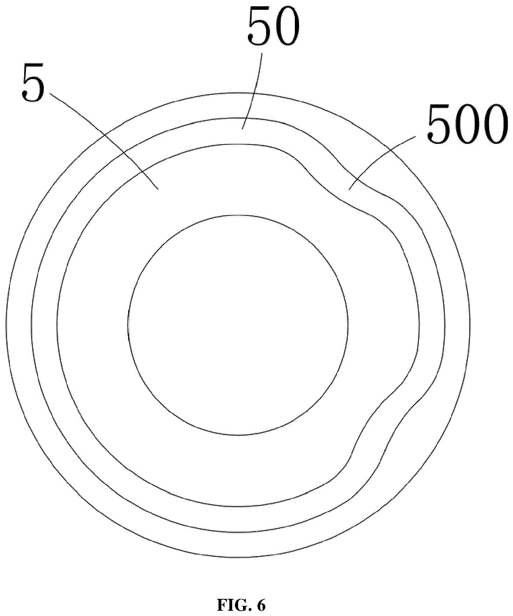

As shown in FIG.2 and FIG.3, the directional holding rotary transfer manipulator A comprises a main seat 1 (to support a flange), a rotating shaft 2, a rotating frame 3, a suction nozzle mechanism 6 and a rotary power source 8 (including drive equipment of a motor, a cylinder as long as a power source is concerned); wherein the rotating shaft 2 is located in the main seat 1 and is connected with the rotary power source 8 in a transmission way, the rotating shaft 2 rotates as driven by the rotary power source 8, the rotating frame 3 is installed on the rotating shaft 2, the suction nozzle mechanism 6 is installed on the rotating frame 3, when the rotating shaft 2 rotates, the suction nozzle mechanism 6 and the rotating frame 3 rotate accordingly; in order to control the action of the suction nozzle mechanism 6, a holding cam 5 and a lifting cam 4 are installed on the main seat 1, a lifting guide groove 40 is arranged on a cylindrical surface of the lifting cam 4 along the circumference, the lifting guide groove 40 is provided with a lifting bending section 400, as shown in FIG.6, a holding guide groove 50 is arranged on a cylindrical surface of the holding cam 5 along the circumference, the holding guide groove 50 is provided with a holding bending section 500, and the holding bending section 500 of the holding guide groove 50 corresponds to the position of the lifting bending section 400 on the lifting guide groove 40; as shown in FIG.5, the suction nozzle mechanism 6 includes a suction nozzle 60, a suction rod 61, a guide block 62, a lifting roller 63 and a retaining roller 66, wherein the suction nozzle 60 is installed on the suction rod 61, the suction rod 61 is rotatably installed on the rotating frame 3, the guide block 62 is rotatably installed on the suction rod 61; as shown in FIG.4, the lifting roller 63 is installed on the inner side of the guide block 62 and located in the lifting guide groove 40, the retaining roller 66 is connected with the suction rod 61 through a rotary arm 65, and the retaining roller 66 is positioned in the holding guide groove 50.

As shown in FIG.7, taking linkage of a pillow bag machine and a boxing machine as an example: when working, the rotary power source 8 drives the rotating shaft 2 to rotate, the rotating shaft 2 drives the rotating frame 3 and the suction nozzle mechanism 6 to rotate, the lifting roller 63 of the suction nozzle mechanism 6 moves in the lifting guide groove 40 of the lifting cam 4, and the retaining roll 66 of the suction nozzle mechanism 6 moves in the holding guide groove 50 of the holding cam 5; when a suction nozzle mechanism 6 approaches the least front end of the output production line of the pillow bag machine, as shown in FIG.2, the lifting roller 63 of the suction nozzle mechanism 6 enters the lifting bending section 400 of the lifting guide groove 40, then the suction nozzle mechanism 6 moves downwards as guided by the bending guide groove, and meanwhile, as the holding bending section 500 of the holding guide groove 50 corresponds to the lifting bending section 400 of the lifting guide groove 40, when the suction nozzle mechanism 6 moves downward, the holding cam 66 enters the holding bending section 500 of the holding guide groove 50, thus the holding cam 66 drives the suction rod 61 to rotate through the rotary arm 65; the suction rod 61 restricts the revolution, and keeps the suction nozzle 60 always a direction in this stage (such as keeping at 10° orientation), the suction nozzle 60 can absorb the material stably; similarly, when the suction nozzle mechanism 6 absorbs materials and transfer the materials to the least front end of the input production line of the boxing machine, the suction nozzle 60 lowers and exhausts air and drops materials, keeping the suction nozzle 60 remains in a direction in this stage when dropping materials so as to ensure the suction nozzle 60 can accurately place the materials into a grille in the input production line of the boxing machine, thus to make the grille size to the smallest width (the materials can fall into the grille accurately as the direction is always remained when the materials are dropped; and the width of a single grille can be slightly larger than the size of the material width) and further improve the efficiency.

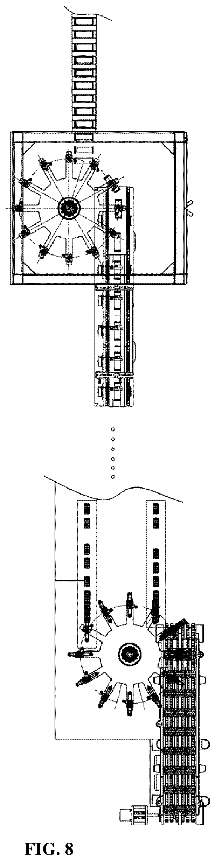

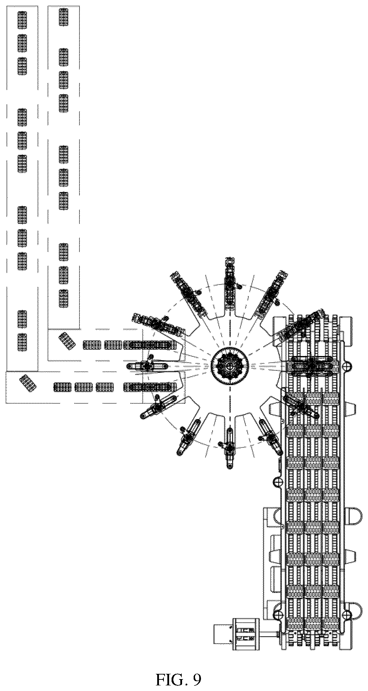

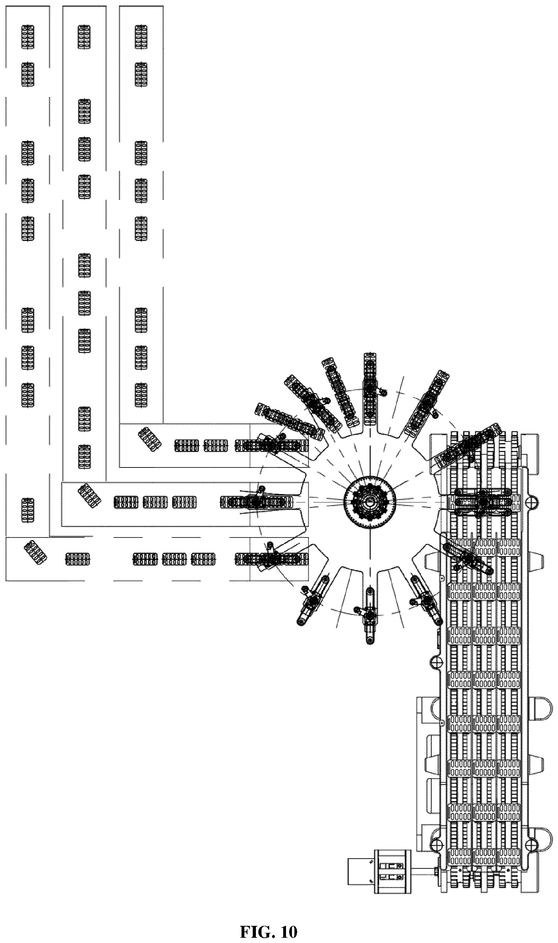

The directional holding rotary transfer manipulator can reduce the linkage space proportion, make layout according to the user's space, as shown in FIG.7, the blister machine can be horizontally connected with the boxing machine; as shown in FIG.8, the blister machine, the pillow bag machine and the boxing machine can be horizontally connected; as shown in FIG.9, the blister machine can be vertically connected with the boxing machine (two-channel boxing, a suction nozzle mechanism including a number of suction nozzles); as shown in FIG.10, the blister machine can be vertically connected with the boxing machine (three-channel boxing, a suction nozzle mechanism including a number of suction nozzles). In order to achieve the above multiple linkage methods, appropriate design is needed for the lifting guide groove of the lifting cam and the holding guide groove of the holding cam, the number of the suction nozzles and the air path control should be set properly so as to achieve multiple directional holding modes including two-direction (three-direction, four-direction and five-direction holding modes), and achieve multiple linkage modes (e.g. Single-channel, two-channel, three-channel, four channel, etc.), thereby achieving double capacity, and maximization matching of the front-end and rear-end equipment capacities.

Under the action of the lifting cam 63, the guide block 62 drives the suction rod 61 to move vertically, horizontal deviation may occur because only the direction of the lifting cam 63 is under pressure. To solve the above problem, a positioning groove block 30 is installed on the rotating frame 3, as shown FIG.4 and FIG.5, a positioning groove 300 extending vertically is arranged on the inner side surface of the positioning groove block 30, a positioning roller 64 is connected to the outer side of the guide block 62 and the positioning roller 64 is located in the positioning groove 300. With this structure, when the guide block 62 drives the suction rod 61 to move vertically, not only the direction of the lifting cam 63 is under pressure, the positioning roller 64 in the other direction of the guide block 62 also move vertically in the positioning groove 300 of the positioning groove block 30, and the movement is constrained by the positioning groove 300; due to two-point constraint, the suction nozzle mechanism 6 does not swing during lifting, thereby guaranteeing the stability of suction nozzle mechanism 6.

Because the packaging quantity of blisters are different and the thickness of the pillow bags varies, to transfer the pillow bags of different thicknesses, the main seat 1 of the invention is installed on a lifting base 11, the lifting base 11 can be installed on a fixed base 12 in such a way that the lifting base can be lifted, and the lifting base 11 is connected with a lifting power source that drives the lifting of the lifting base (the lifting power source is not shown). With the drive of the lifting power source , the lifting base 11 can lift up and down on the fixed base 12, thereby lifting or lowering the entire manipulator, so as to control the height of the suction nozzle 60.

To make the lifting base 11 move stably, a sliding rail 120 is installed on the fixed base 12, a sliding seat 110 is installed on the lifting base 11, and the sliding seat 110 is arranged on the sliding rail 120 in a sliding way. To make the lifting base 11 move vertically and accurately, a screw rod is installed on the fixed base 12, a thread insert is installed on the sliding base 110, the screw rod is connected with the thread insert, and the screw rod is connected with the lifting power source. The screw rods rotates as driven by the lifting power source, and the sliding base 110 can move up and down stably and accurately on the sliding rail 120.

Of course, the suction nozzle 60 should be connected with an air source, and the suction nozzle 60 can be connected with the air source in the following ways: a main air path 20 is provided on the rotating shaft 2, an air outlet of the main air path 20 is communicated with an air path 610 on the suction rod 61 through a lower air path, the air path 610 on the suction rod 61 is communicated with the suction nozzle 60, an air inlet of the main air path 20 is communicated with a rotary air path 7 through an upper air path, the rotary air path 7 is connected with an electromagnetism valve island 10, and the electromagnetism valve island 10 is connected with an air storage tank 9. The nozzle rod 61 is controlled by a separate solenoid valve to complete high-speed switching from a negative pressure to a positive pressure, thus to achieve high-speed transfer of 600 packets/MIN pillow bags and 800 plates/ MIN blisters.

The last one thing to mention is that the holding cam and the lifting cam are both made of supramolecular materials (i.e. 9,000,000 super-high molecules). The cam made of the above material has the benefits of: noise reduction if in contact with rollers (retaining roller and lifting roller); maintenance-free, there is no need to add grease on the guide groove of the cam, the machine is entirely clean and without any oil stain, thereby avoiding the risk of cross contamination of the packaging products.

## Claims

1. A directional holding rotary transfer manipulator comprises a main seat (1), a rotating shaft (2), a rotating frame (3), a suction nozzle mechanism (6) and a rotary power source (8), wherein the rotating shaft (2) is installed in the main seat (1) and connected with the rotary power source (8) in a transmission way, the rotating frame (3) is installed on the rotating shaft (2), and the suction nozzle mechanism (6) is installed on the rotating frame (3), and a holding cam (5) and a lifting cam (4) are installed on the main seat (1); a lifting guide groove (40) is arranged on a cylindrical surface of the lifting cam (4) along the circumference, the lifting guide groove (40) is provided with a lifting bending section (400), a holding guide groove (50) is arranged on a cylindrical surface of the holding cam (5) along the circumference, the holding guide groove (50) is provided with a holding bending section (500), and the holding bending section (500) of the holding guide groove (50) corresponds to the position of the lifting bending section (400) on the lifting guide groove (40); the suction nozzle mechanism (6) includes a suction nozzle (60), a suction rod (61), a guide block (62), a lifting roller (63) and a retaining roller (66),
**characterized in that** the suction nozzle (60) is installed on the suction rod (61), the suction rod (61) is rotatably installed on the rotating frame (3), the guide block (62) is rotatably installed on the suction rod (61), the lifting roller (63) is installed on the inner side of the guide block (62) and located in the lifting guide groove (40), the retaining roller (66) is connected with the suction rod (61) through a rotary arm (65), and the retaining roller (66) is positioned in the holding guide groove (50).

2. The directional holding rotary transfer manipulator according to Claim 1, wherein a positioning groove block (30) is installed on the rotating frame (3), a positioning groove (300) extending vertically is arranged on the inner side surface of the positioning groove block (30), a positioning roller (64) is connected to the outer side of the guide block (3) and the positioning roller (64) is located in the positioning groove (300).

3. The directional holding rotary transfer manipulator according to Claim 1, wherein the main seat (1) is installed on a lifting base (11), and the lifting base (11) can be installed on a fixed base (12) in such a way that the lifting base can be lifted, and the lifting base (11) is connected with a lifting power source that drives the lifting of the lifting base (11).

4. The directional holding rotary transfer manipulator according to Claim 3, wherein the manipulator is **characterized in that** a sliding rail (120) is installed on the fixed base (12), a sliding seat (110) is installed on the lifting base (11), and the sliding seat (110) is arranged on the sliding rail (120) in a sliding way.

5. The directional holding rotary transfer manipulator according to Claim 4, a screw rod is installed on the fixed base (12), a thread insert is installed on the sliding base (110), the screw rod is connected with the thread insert, and the screw rod is connected with the lifting power source.

6. The directional holding rotary transfer manipulator according to Claim 1, wherein a main air path (20) is provided on the rotating shaft (2), an air outlet of the main air path (20) is communicated with an air path on the suction rod (61) through a lower air path, the air path on the suction rod (61) is communicated with the suction nozzle (60), an air inlet of the main air path (20) is communicated with a rotary air path (7) through an upper air path, the rotary air path (7) is connected with an electromagnetism valve island (10), and the electromagnetism valve island (10) is connected with an air storage tank (9).

7. The directional holding rotary transfer manipulator according to Claim 1, wherein the holding cam (5) and the lifting cam (4) are both made of supramolecular materials.

## Patentansprüche

1. Ein richtungshaltender rotationsübertragender Manipulator umfasst einen Hauptsitz (1), eine Drehwelle (2), einen Drehrahmen (3), einen Saugdüsenmechanismus (6) und eine rotierende Energiequelle (8), wobei die Drehwelle (2) in dem Hauptsitz (1) installiert und mit der rotierenden Energiequelle (8) in einem Getriebe verbunden ist, der Drehrahmen (3) auf der Drehwelle (2) installiert ist, und der Saugdüsenmechanismus (6) auf dem Drehrahmen (3) installiert ist, und ein Haltenocken (5) und ein Hebenocken (4) auf dem Hauptsitz (1) installiert sind; eine Hebeführungsnut (40), die auf einer zylindrischen Oberfläche des Hebenockens (4) entlang des Umfangs angeordnet ist, die Hebeführungsnut (40) mit einem Hebebiegeabschnitt (400) vorgesehen ist, eine Halteführungsnut (50) auf einer zylindrischen Oberfläche des Haltenockens (5) entlang des Umfangs angeordnet ist, die Halteführungsnut (50) mit einem Haltebiegeabschnitt (500) vorgesehen ist, und der Haltebiegeabschnitt (500) der Halteführungsnut (50) der Position des Hebebiegeabschnitts (400) an der Hebeführungsnut (40) entspricht; der Saugdüsenmechanismus (6) eine Saugdüse (60), eine Saugstange (61), einen Führungsblock (62), eine Heberolle (63) und eine Halterolle (66) umfasst,
**dadurch gekennzeichnet, dass**
die Saugdüse (60) an der Saugstange (61) angebracht ist, die Saugstange (61) an dem Drehrahmen (3) drehbar angebracht ist, der Führungsblock (62) an der Saugstange (61) drehbar angebracht ist, die Heberolle (63) an der Innenseite des Führungsblocks (62) angebracht und in der Hebeführungsnut (40) angeordnet ist, die Halterolle (66) mit der Saugstange (61) über einen Dreharm (65) verbunden ist und die Halterolle (66) in der Halteführungsnut (50) positioniert ist.

2. Richtungshaltender rotationsübertragender Manipulator nach Anspruch 1, bei dem ein Positioniernutblock (30) auf dem Drehrahmen (3) installiert ist, eine vertikal verlaufende Positioniernut (300) an der inneren Seitenfläche des Positioniernutblocks (30) angeordnet ist, eine Positionierrolle (64) mit der Außenseite des Führungsblocks (3) verbunden ist und die die Positionierrolle (64) in der Positioniernut (300) angeordnet ist.

3. Der richtungshaltende rotationsübertragende Manipulator nach Anspruch 1, wobei der Hauptsitz (1) auf einer Hebebasis (11) installiert ist, und die Hebebasis (11) auf einer festen Basis (12) so installiert werden kann, dass die Hebebasis angehoben werden kann, und die Hebebasis (11) mit einer Hebekraftquelle verbunden ist, die das Anheben der Hebebasis (11) antreibt.

4. Der richtungshaltende rotationsübertragende Manipulator nach Anspruch 3, wobei der Manipulator **dadurch gekennzeichnet ist, dass** eine Gleitschiene (120) an der festen Basis (12) installiert ist, ein Gleitsitz (110) an der Hebebasis (11) installiert ist und der Gleitsitz (110) auf der Gleitschiene (120) gleitend angeordnet ist.

5. Der richtungshaltende rotationsübertragende Manipulator nach Anspruch 4, wobei eine Gewindestange an der festen Basis (12) installiert ist, ein Gewindeeinsatz an der Gleitbasis (110) installiert ist, die Gewindestange mit dem Gewindeeinsatz verbunden ist und die Gewindestange mit der Hebekraftquelle verbunden ist.

6. Der richtungshaltende rotationsübertragende Manipulator nach Anspruch 1, wobei ein Hauptluftpfad (20) an der Drehwelle (2) vorgesehen ist, ein Luftauslass des Hauptluftpfades (20) mit einem Luftpfad an der Saugstange (61) über einen unteren Luftpfad verbunden ist, der Luftpfad an der Saugstange (61) mit der Saugdüse (60) verbunden ist, ein Lufteinlass des Hauptluftpfad (20) über einen oberen Luftpfad mit einem Drehluftpfad (7) verbunden ist, der Drehluftpfad (7) mit einer Elektromagnetventilinsel (10) verbunden ist und die Elektromagnetventilinsel (10) mit einem Luftspeicher (9) verbunden ist.

7. Der richtungshaltende rotationsübertragende Manipulator nach Anspruch 1, **dadurch gekennzeichnet, dass** sowohl die Haltenocke (5) als auch die Hebenocke (4) aus supramolekularen Werkstoffen hergestellt sind.

## Revendications

1. Manipulateur de transfert rotatif à maintien directionnel comprend un siège principal (1), un arbre rotatif (2), un cadre rotatif (3), un mécanisme de buse d'aspiration (6) et une source d'énergie rotative (8), dans lequel l'arbre rotatif (2) est installé dans le siège principal (1) et connecté à la source d'énergie rotative (8) par transmission, le cadre rotatif (3) est installé sur l'arbre rotatif (2), et le mécanisme de buse d'aspiration (6) est installé sur le cadre rotatif (3), et une came de maintien (5) et une came de levage (4) sont installées sur le siège principal (1) ; une rainure de guidage de levage (40) est agencée sur une surface cylindrique de la came de levage (4) le long de la circonférence, la rainure de guidage de levage (40) est pourvue d'une section de flexion de levage (400), une rainure de guidage de maintien (50) est agencée sur une surface cylindrique de la came de maintien (5) le long de la circonférence, la rainure de guidage de maintien (50) est pourvue d'une section de flexion de maintien (500), et la section de flexion de maintien (500) de la rainure de guidage de maintien (50) correspond à la position de la section de flexion de levage (400) sur la rainure de guidage de levage (40) ; le mécanisme de buse d'aspiration (6) comprend une buse d'aspiration (60), une tige d'aspiration (61), un bloc de guidage (62), un rouleau de levage (63) et un rouleau de retenue (66),
**caractérisé en ce que** la buse d'aspiration (60) est installée sur la tige d'aspiration (61), la tige d'aspiration (61) est installée de manière rotative sur le cadre rotatif (3), le bloc de guidage (62) est installé de manière rotative sur la tige d'aspiration (61), le rouleau de levage (63) est installé sur le côté intérieur du bloc de guidage (62) et situé dans la rainure de guidage de levage (40), le rouleau de retenue (66) est connecté à la tige d'aspiration (61) par l'intermédiaire d'un bras rotatif (65), et le rouleau de retenue (66) est positionné dans la rainure de guidage de maintien (50).

2. Manipulateur de transfert rotatif à maintien directionnel selon la revendication 1, dans lequel un bloc de rainure de positionnement (30) est installé sur le cadre rotatif (3), une rainure de positionnement (300) s'étendant verticalement est agencée sur la surface latérale interne du bloc de rainure de positionnement (30), un rouleau de positionnement (64) est connecté au côté externe du bloc de guidage (3) et le rouleau de positionnement (64) est situé dans la rainure de positionnement (300).

3. Manipulateur de transfert rotatif à maintien directionnel selon la revendication 1, dans lequel le siège principal (1) est installé sur une base de levage (11), et la base de levage (11) peut être installée sur une base fixe (12) de sorte que la base de levage puisse être soulevée, et la base de levage (11) est connectée à une source de puissance de levage qui entraîne le levage de la base de levage (11).

4. Manipulateur de transfert rotatif à maintien directionnel selon la revendication 3, dans lequel le manipulateur est **caractérisé en ce qu'**un rail coulissant (120) est installé sur la base fixe (12), un siège coulissant (110) est installé sur la base de levage (11), et le siège coulissant (110) est agencé sur le rail coulissant (120) de manière coulissante.

5. Manipulateur de transfert rotatif à maintien directionnel selon la revendication 4, une tige filetée est installée sur la base fixe (12), un insert fileté est installé sur la base coulissante (110), la tige filetée est connectée à l'insert fileté, et la tige filetée est connectée à la source de puissance de levage.

6. Manipulateur de transfert rotatif à maintien directionnel selon la revendication 1, dans lequel un chemin d'air principal (20) est prévu sur l'arbre rotatif (2), une sortie d'air du chemin d'air principal (20) est en communication avec un chemin d'air sur la tige d'aspiration (61) à travers un chemin d'air inférieur, le chemin d'air sur la tige d'aspiration (61) est en communication avec la buse d'aspiration (60), une entrée d'air du chemin d'air principal (20) est en communication avec un chemin d'air rotatif (7) par l'intermédiaire d'un chemin d'air supérieur, le chemin d'air rotatif (7) est connecté à un îlot de soupape électromagnétique (10), et l'îlot de soupape électromagnétique (10) est connecté à un réservoir de stockage d'air (9).

7. Manipulateur de transfert rotatif à maintien directionnel selon la revendication 1, dans lequel la came de maintien (5) et la came de levage (4) sont toutes deux constituées de matériaux supramoléculaires.
